# EUROPÄISCHE PATENTANMELDUNG

(11) **EP 3 299 956 A1**
(43) Veröffentlichungstag der Anmeldung: **28.03.2018**
(21) Anmeldenummer: 16190546.8
(22) Anmeldetag: 26.09.2016
(51) Int. Cl.: G06F 9/44

(54) **VERFAHREN UND ANORDNUNG ZUR AKTUALISIERUNG EINES COMPUTERPROGRAMMS**

(71) Anmelder: Siemens Aktiengesellschaft, 80333 München (DE)
(72) Erfinder: Schuster, Robert, 2490 Ebenfurth (AT)

(57) **Zusammenfassung**

Die Erfindung betrifft ein Verfahren und ein Engineering-System zur Aktualisierung eines Computerprogramms einer industriellen Automatisierungskomponente, wobei das Computerprogramm jeweils aus einer Vielzahl von ausführbaren Dateien besteht, und wobei bei der Aktualisierung solche der Dateien identifiziert und in der Automatisierungskomponente aktualisiert werden, die sich von den jeweils korrespondierenden ausführbaren Dateien (ID) des bestehenden Computerprogramms der Automatisierungskomponente unterscheiden. Dabei werden in den ausführbaren Dateien (ID) des bestehenden Computerprogramms und des aktualisierten Computerprogramms nichtfunktionale Dateiinhalte (NFE) jeweils identifiziert, wobei die ausführbaren Dateien (ID) des bestehenden Computerprogramms mit den korrespondierenden Dateien des aktualisierten Computerprogramms jeweils verglichen werden, wobei die identifizierten nicht-funktionalen Dateiinhalte (NFE) jeweils bei dem Vergleich nicht berücksichtigt werden, und wobei die bei dem Vergleich im Wesentlichen die als unterschiedlich zur jeweiligen Version des bestehenden Computerprogramms ermittelten ausführbaren Dateien (AD) des aktualisierten Computerprogramms zur Aktualisierung des Computerprogramms der Automatisierungskomponente verwendet. Damit ist es möglich, den Umfang der bei einer Software-Aktualisierung zu übertragenden ausführbaren Dateien zu optimieren und den für eine manuelle Bestimmung von Abhängigkeiten erforderlichen personellen Aufwand zu reduzieren oder einzusparen.

## Beschreibung

Die Erfindung betrifft ein Verfahren zur Aktualisierung eines Computerprogramms einer industriellen Automatisierungskomponente gemäß dem Oberbegriff des Patentanspruchs 1, und ein Engineering-System zur Durchführung des Verfahrens gemäß dem Oberbegriff des Patentanspruchs 8.

Industrielle Automatisierungskomponenten, auch speicherprogrammierbare Steuerungen oder PLC genannt und andere computerbasierte Systeme bestehen in der Regel aus einer mikroprozessorgesteuerten Hardware, die mit einer sogenannten Firmware als Basis-Software und einem Betriebssystem versehen ist, wobei eine Anwendung bzw. Applikation die Funktionalität des Systems bestimmt. Zumindest das Betriebssystem und das Anwendungsprogramm bzw. die Anwendungsprogramme müssen in der Regel von Zeit zu Zeit gewartet werden, das heißt, dass das Betriebssystem und insbesondere das Anwendungsprogramm, im folgenden zusammengefasst als "Computerprogramm" bezeichnet, aktualisiert werden müssen, was bedeutet, dass Teile des Computerprogramms ausgetauscht werden müssen.

Das "Computerprogramm", also die auf einem System installierte Software, besteht dabei regelmäßig aus einer Vielzahl von ausführbaren Dateien (sogenannter "Object-Code" oder auch "Zwischen-Code"), die zumindest teilweise während eines Aktualisierungsvorgangs ("Software-Update") ausgetauscht werden müssen.

Die organisatorisch einfachste Möglichkeit zur Aktualisierung eines Computerprogramms besteht darin, das komplette Computerprogramm in seiner aktualisierten Form neu zu installieren und das zugrundeliegende System (Computer oder Automatisierungskomponente) neu zu starten. Aus verschiedenen Gründen ist dies jedoch oft nicht praktikabel. Zum einen ist der Umfang von Computerprogrammen oft so groß, dass ein kompletter Austausch der Software sehr aufwendig ist. Zum anderen ist man bestrebt, die nach einem kompletten Austausch einer Software erforderlichen Konfigurierungsarbeiten einzusparen. Schließlich ist es bei kleineren Aktualisierungen oft auch möglich, diese im laufenden Betrieb eines Systems vorzunehmen. Daher werden üblicherweise nur sogenannte "Teil-Aktualisierungen" vorgenommen, die oft auch als "Patches" (Reparatur-Software) oder auch als "Delta-Updates" bezeichnet, wobei die letztgenannte Bezeichnung darauf hinweist, dass nur die Unterschiede eines aktualisierten Computerprogramms zum bereits bestehenden Computerprogramm installiert werden sollen. Kurz gesagt ist man also bestrebt, die Anzahl der zu aktualisierenden ausführbaren Dateien auf das notwendige Minimum zu beschränken.

Die auf modernen Systemen installierte Software, also das "Computerprogramm", besteht oft aus einigen tausenden einzelner ausführbarer Dateien, wobei schon kleinere Änderungen im Quellcode an einzelnen Funktionen durch die Wechselwirkungen zwischen den einzelnen Teil-Programmen dazu führen können, dass viele andere ausführbare Dateien indirekt ebenfalls geändert werden und daher bei der Aktualisierung des zugrundeliegenden Systems ausgetauscht bzw. neu installiert werden müssen. Ein Problem besteht darin, diejenigen ausführbaren Dateien zu identifizieren, die tatsächlich erneuert werden müssen. Eine Möglichkeit dazu ist die manuelle Bestimmung der Abhängigkeiten im erzeugten (kompilierten) Programmcode, dem sogenannten "Software-Build", nach einer Source-Code-Änderung, was aber einen hohen manuellen Aufwand bedeutet und potentiell fehlerbehaftet ist. Insbesondere bei komplexen Systemen ist es für einzelne Personen bzw. Software-Entwickler nahezu unmöglich, alle Abhängigkeiten akkurat nachzuverfolgen.

Eine weitere Möglichkeit besteht darin, einen Compiler entscheiden zu lassen, welche ausführbaren Dateien neu erzeugt werden müssten. Eine solche Funktionalität ist auch als "Delta-Build" bekannt. Dabei entscheidet ein Compiler nach einer vorgenommenen Änderung im "Source-Code", welche sogenannten "Executables" betroffen sind und neu erzeugt werden müssen. Eine korrekte Funktion dieser Funktionalität setzt jedoch eine perfekte Abbildung der Abhängigkeiten im System voraus, was jedoch nicht zwangsläufig gegeben ist. Als ein Resultat werden oftmals auch solche ausführbaren Dateien neu erzeugt, deren Inhalt sich überhaupt nicht geändert hat.

Ein weiteres Problem besteht darin, dass sich sowohl im Source-Code als auch in den erzeugten ausführbaren Dateien oft nur Informationen wie zum Beispiel Zeitstempel, Bezeichner-Namen, Versionsinformationen, Signaturen und andere Daten ändern, die keinen Einfluss auf die Funktionalität, also den ablauffähigen Programmcode, einer ausführbaren Datei haben.

Mit anderen Worten: die Aktualisierung aller vom Compiler neu erzeugten Teil-Programme (ausführbare Dateien) führt oft zu unnötig hohem Umfang der Software-Aktualisierung.

Es ist also eine Aufgabe der vorliegenden Erfindung, die bei der Wartung bzw. Aktualisierung von Computerprogrammen neu zu installierenden ausführbaren Dateien auf das technisch notwenige Minimum zu reduzieren.

Der erfindungsgemäßen Lösung der Aufgabe liegt die Idee zugrunde, dass die bestehenden ausführbaren Dateien (Binärcode, Object-Code, Zwischencode) des installierten Computerprogramms mit den korrespondierenden Dateien des aktualisierten Computerprogramms verglichen werden, wobei nur im Falle von Abweichungen die entsprechende Datei neu installiert bzw. zum Zielsystem übertragen werden muss. Dabei sollen erfindungsgemäß nicht-funktionale Informationen, Elemente oder Bestandteil der ausführbaren Dateien, die also auf die Funktionalität und damit den ablaufenden Programmcode keinen Einfluss haben, bei dem Vergleich außer Acht bleiben. Dies bedeutet, dass die nicht-funktionalen Bestandteile oder Inhalte der ausführbaren Dateien bei dem Vergleich entweder ausgespart werden, oder aber auf andere Weise so manipuliert werden, dass Unterschiede in diesen nicht-funktionalen Dateiinhalten keinen Einfluss auf das Vergleichsergebnis haben. Bei jedem neuen "Build" eines Computerprogramms aus identischem "Source-Code-Stand" kann es also nicht-funktionale binäre Unterschiede in den erzeugten ausführbaren Dateien geben, die jedoch erfindungsgemäß nicht dazu führen sollen, dass die entsprechende ausführbare Datei aktualisiert werden muss.

Die Lösung der Aufgabe sieht insbesondere ein Verfahren gemäß Patentanspruch 1 und ein Engineering-System gemäß Patentanspruch 8 vor.

Dabei wird ein Verfahren zur Aktualisierung eines Computerprogramms einer industriellen Automatisierungskomponente vorgeschlagen, wobei das Computerprogramm jeweils aus einer Vielzahl von ausführbaren Dateien besteht, und wobei bei der Aktualisierung nur solche der Dateien identifiziert und in der Automatisierungskomponente aktualisiert werden, die sich von den jeweils korrespondierenden ausführbaren Dateien des bestehenden Computerprogramms der Automatisierungskomponente unterscheiden. Dabei werden in den ausführbaren Dateien des bestehenden Computerprogramms und des aktualisierten Computerprogramms nicht-funktionale Dateiinhalte jeweils identifiziert, wonach die ausführbaren Dateien des bestehenden Computerprogramms mit den korrespondierenden Dateien des aktualisierten Computerprogramms jeweils verglichen werden, wobei die identifizierten nicht-funktionalen Dateiinhalte jeweils bei dem Vergleich nicht berücksichtigt werden und wobei nur die bei dem Vergleich als funktional unterschiedlich zur jeweiligen Version des bestehenden Computerprogramms ermittelten ausführbaren Dateien des aktualisierten Computerprogramms zur Aktualisierung des Computerprogramms der Automatisierungskomponente verwendet werden. Damit ist es möglich, den Umfang der bei einer Software-Aktualisierung zu übertragenden ausführbaren Dateien zu optimieren und den für eine manuelle Bestimmung von Abhängigkeiten erforderlichen personellen Aufwand zu reduzieren oder einzusparen.

Die Aufgabe sieht außerdem ein Engineering-System zur Aktualisierung eines Computerprogramms einer industriellen Automatisierungskomponente vor, wobei das Computerprogramm jeweils aus einer Vielzahl von ausführbaren Dateien besteht, und wobei das Engineering-System zur Identifizierung solcher Dateien eines aktualisierten Computerprogramms eingerichtet ist, die sich von den jeweils korrespondierenden ausführbaren Dateien des bestehenden Computerprogramms der Automatisierungskomponente unterscheiden, und wobei das Engineering-System zur Aktualisierung dieser sich funktional unterscheidender ausführbarer Dateien der Automatisierungskomponente eingerichtet ist. Dabei ist das Engineering-System derart eingerichtet, dass in den ausführbaren Dateien des bestehenden Computerprogramms und des aktualisierten Computerprogramms nicht-funktionale Dateiinhalte jeweils identifiziert werden, wobei die ausführbaren Dateien des bestehenden Computerprogramms mit den korrespondierenden Dateien des aktualisierten Computerprogramms jeweils verglichen werden, wobei die zuvor identifizierten nicht-funktionalen Dateiinhalte jeweils bei dem Vergleich nicht berücksichtigt werden, und wobei nur die bei dem Vergleich als unterschiedlich zur jeweiligen Version des bestehenden Computerprogramms ermittelten ausführbaren Dateien des aktualisierten Computerprogramms zur Aktualisierung des Computerprogramms der Automatisierungskomponente verwendet werden. Mit einem solchen Engineering-System können die bereits anhand des Verfahrens diskutierten Vorteile realisiert werden.

Vorteilhafte Ausgestaltungen der Erfindung sind in den abhängigen Patentansprüchen angegeben. Die dabei beschriebenen Merkmale und Vorteile können sowohl einzeln, als auch in Kombination miteinander realisiert werden.

Vorteilhaft können für den Vergleich, der dazu führen soll, diejenigen der ausführbaren Dateien zu bestimmen, die eine funktionale Änderung erfahren haben, alle nicht-funktionalen Dateiinhalte und damit einhergehende Auswirkungen auf das Vergleichsergebnis ausgespart werden, also bei dem Binärvergleich keine Berücksichtigung finden. Dies kann durch "Überspringen" der entsprechenden Dateiinhalte geschehen, kann jedoch auch dadurch erreicht werden, dass die nicht-funktionalen Bestandteile der ausführbaren Dateien durch ein vorbestimmtes Bitmuster ersetzt werden, beispielsweise durch logische Einsen, logische Nullen, oder ein anderes sich wiederholendes Muster mit der Maßgabe, dass beide miteinander zu vergleichenden ausführbaren Dateien auf dieselbe Art und Weise behandelt werden. Besonders vorteilhaft ist ein "neutrales" Bitmuster, welches unabhängig von seiner Länge bei dem Vergleich neutral ist. Der Vergleich kann dadurch erfolgen, dass von beiden zu vergleichenden Dateien nach der "Neutralisierung" der nicht-funktionalen Inhalte ein Signaturwert, Prüfwert/Prüfsumme, Hash-wert o.ä. errechnet und verglichen wird; bei dieser Vorgehensweise kann der Algorithmus zur Bildung des Signaturwerts o.ä. so ausgestaltet sein, dass "neutrale" Bitmuster keinen Einfluss darauf haben. Alternativ kann auch ein vollständiger binärer Vergleich der vorher um nicht-funktionale Inhalte bereinigten Dateien durchgeführt werden.

In einer vorteilhaften Variante können wohlbekannte, nicht-funktionale Bestanteile der ausführbaren Dateien generell von dem Vergleich ausgespart werden, insbesondere Zeitstempel der Dateien, Identifikationsbezeichnungen der Dateien, Signaturen der Dateien und/oder in den Dateien kodierte Versionsinformationen oder dergleichen. Sofern diese nicht-funktionalen Dateibestandteile nicht ohnehin an den gleichen Adressen der Datei, insbesondere in einem sogenannten "Header", angeordnet sind, ist es von Vorteil, wenn durch einen Compiler oder durch Steueroptionen in einem Programm-Editor dafür Sorge getragen wird, dass diesen Dateiinhalten ein binärer "Marker", also ein Bitmuster ("pattern") besonderer Art, vorangestellt wird bzw. die Informationen zwischen solchen "Markern" gespeichert werden. Dann kann für den Vergleich die jeweils zu vergleichende ausführbare Datei nach diesem speziellen Marker bzw. Bitmuster durchsucht werden und die damit gekennzeichneten Informationen bei dem Vergleich ausgespart oder durch eine "neutrale" Bitfolge ersetzt werden oder dergleichen.

Eine weitere Möglichkeit zur Identifizierung von nichtfunktionalem Dateiinhalt besteht darin, dass für die Speicherung von nicht-funktionalen Dateiinhalten eine Konvention für die dabei zu verwendenden Adress- oder Dateibereiche o.ä. definiert und berücksichtigt wird, beispielsweise speziell dafür vorgesehene "Header" oder Datencontainer oder dergleichen. Solche definierten Speicher- oder Adressbereiche der ausführbaren Dateien können dann generell von dem Vergleich ausgenommen werden.

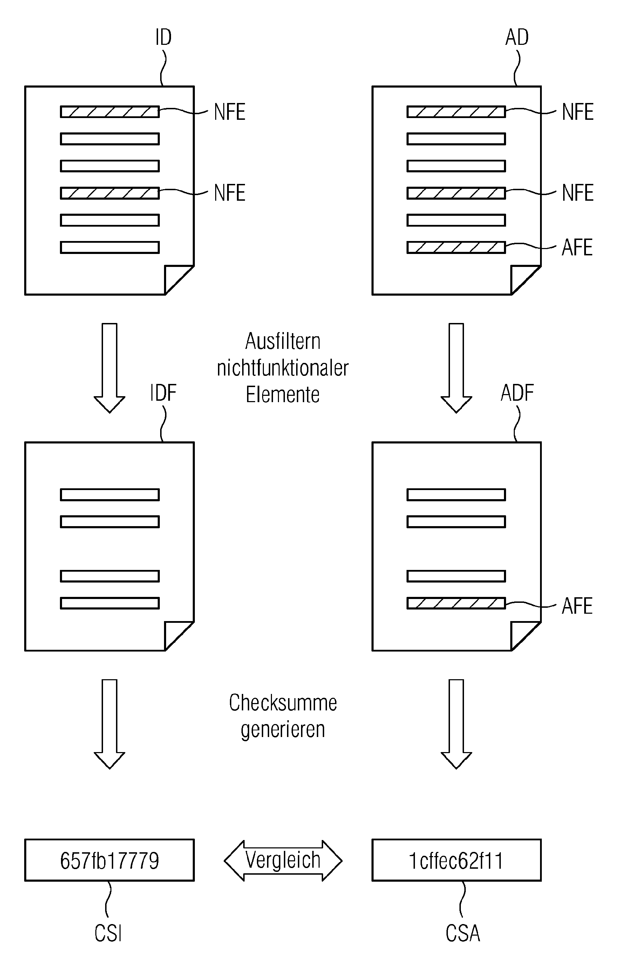

Ein Ausführungsbeispiel des erfindungsgemäßen Verfahrens wird nachfolgend anhand der Zeichnung erläutert. Es dient gleichzeitig der Erläuterung eines erfindungsgemäßen Engineering-Systems.

Dabei zeigt die einzige Figur in schematischer Darstellung den Vergleich einer bestehenden und einer aktualisierten Version einer ausführbaren Datei gemäß dem erfindungsgemäßen Verfahren.

In dem nachfolgend geschilderten Ausführungsbeispiel wird davon ausgegangen, dass ein zu aktualisierendes Computerprogramm aus einer Vielzahl ausgeführbarer Dateien besteht, wobei hier exemplarisch nur eine ausführbare Datei (z.B. "executable", "DLL" oder dergleichen) betrachtet werden soll. Dabei wird davon ausgegangen, dass auf einem zu aktualisierenden Computersystem, beispielsweise einer speicherprogrammierbaren Steuerung, eine ausführbare Datei ID ("Ist-Datei") gespeichert und installiert ist; diese Datei ID ist also beispielsweise Bestandteil eines Automatisierungsprogramms oder des Betriebssystems. Während der Weiterentwicklung des Computerprogramms oder des Betriebssystems sind eine Vielzahl neuer ausführbarer Dateien erzeugt worden, die die bereits installierten ausführbaren Dateien, darunter auch die hier betrachtete Datei ID, ersetzen sollen. Dabei sollen jedoch nur diejenigen ausführbaren Dateien tatsächlich zu dem Computersystem bzw. der speicherprogrammierbaren Steuerung übermittelt und neu installiert werden, die sich funktional weiter entwickelt haben, die sich also funktional von der bestehenden Datei, hier also der exemplarisch betrachteten Datei ID, unterscheiden. Ein solches teilweises Aktualisieren des Computerprogramms kann auch als "Delta-Update" bezeichnet werden, weil eben nur notwendige Teile aktualisiert werden.

Sowohl die bestehend ausführbare Datei ID als auch die korrespondierende, neu erzeugte ausführbare Datei AD ("aktualisierte Datei") enthalten eine Vielzahl von Befehlen, Anweisungen, Daten, Konstanten, Parametern, Adressen und dergleichen; diese sollen zusammengefasst als "Elemente" bezeichnet werden. In der Figur sind diese Elemente als rechteckige Balken symbolhaft dargestellt.

Sowohl die bestehende ausführbare Datei ID als auch die aktualisierte ausführbare Datei AD enthalten nicht-funktionale Elemente NFE, die sich bei beiden Versionen der Datei ID, AD voneinander unterscheiden können, und zwar auch dann, wenn beide Versionen die gleiche Funktionalität aufweisen, insbesondere auch dann, wenn beiden Versionen derselbe Quellcode zugrunde liegt. Solche nicht-funktionalen Elemente NFE können also nach jedem neuen "Build" eines "Excetuables" auch aus identischem Sourcecode-Stand binäre Unterschiede aufweisen. Beispiele für solche nicht-funktionalen Elemente sind unterschiedliche Zeitstempel, unterschiedliche Identifikatoren, verschiedene Signaturen, Versionsinformationen etc..

Durch einen Vergleich, beispielsweise einen binären Vergleich, der bestehenden Version der Datei ID und der aktualisierten Version der Datei AD würden diese fast immer unterschiedlichen nicht-funktionalen Elemente NFE dazu führen, dass beide Versionen als unterschiedlich erkannt werden und somit immer aktualisiert, also erneut zu dem Zielsystem übertragen und dort installiert, werden, auch dann, wenn dies technisch oder funktional gar nicht erforderlich ist. Daher werden vor einem Vergleich der beiden Versionen der Datei ID, AD, die nicht-funktionalen Elemente ausgefiltert, d.h., dass diese nicht-funktionalen Elemente NFE für den Zweck des Vergleichs aus den dabei verwendeten Kopien der Dateien ID, AD entfernt werden. Alternativ können die nicht-funktionalen Elemente NFE auch durch ein Vergleichs-neutrales Bitmuster ersetzt werden, oder aber bei dem Vergleich "übersprungen" werden. Nach diesem Arbeitsschritt liegen bereinigte Versionen der Dateien IDF ("Ist-Datei-gefiltert") und ADF (Aktualisierte-Datei-gefiltert") vor. In der Figur ist zu sehen, dass die in den Dateien ID, AD gezeigten nicht-funktionalen Elemente NFE bei den zu vergleichenden Dateien IDF, ADF fehlen. Jedoch ist in der Datei AD ein Element AFE ("aktualisiertes funktionales Element") zu sehen, welches nicht in eine der als "nicht-funktional" identifizierten Kategorien von Elementen fällt und daher bei dem Ausfiltern nicht-funktionaler Elemente auch nicht aus der Datei AD entfernt wurde und daher immer noch in der gefilterten Datei ADF vorhanden ist.

Im nachfolgenden Schritt sollen die Dateien IDF, ADF verglichen werden. Dazu sind verschiedene Methoden einsetzbar, beispielsweise ein binärer Vergleich, was jedoch bedingt, dass die Dateien perfekt von nicht-funktionalen Elementen bereinigt sind und sich auch nicht hinsichtlich einer Formatierung oder dergleichen unterscheiden. Aus diesem Grund wird in diesem Ausführungsbeispiel bevorzugt eine Checksumme oder Prüfsumme über beide Dateien IDF, ADF generiert. Der Algorithmus zur Generierung der Prüfsumme kann beispielsweise Anweisungen umfassen, gemäß derer Formatierungszeichen, Leerzeichen, oder auch etwaige zum Ausfiltern eingebrachten neutralen Bitmuster kein Einfluss auf eine generierte Checksumme haben. Weiter ist es möglich, in den Dateien ID, AD und damit auch in den Dateien IDF, ADF bestimmte Informationen und Elemente, beispielsweise Versionsbezeichnungen oder dergleichen, durch Steuerzeichen bzw. spezifische Bitmuster zu markieren, so dass diese ebenfalls bei der Berechnung der Checksumme unberücksichtigt bleiben. Als Resultat dieses Arbeitsschrittes liegt für jede der Dateien IDF, ADF eine Checksumme CSI ("Checksumme Ist-Datei") und CSA ("Checksumme aktualisierte-Datei") vor. Beide Checksummen CSI, CSA werden miteinander verglichen; im vorliegenden Ausführungsbeispiel ist aufgrund des Elementes AFE ein Unterschied in diesen Checksummen CSI, CSA zu verzeichnen, so dass als ein Resultat die ausführbare Datei AD zur Aktualisierung der bestehenden Datei ID verwendet werden muss. Bei identischen Checksummen CSI, CSA könnte hingegen eine Aktualisierung unterbleiben.

Das vorstehende Verfahren kann weitestgehend automatisiert ablaufen. Als ein Vorteil ergibt sich ein geringerer Personalaufwand bei der Generierung der sogenannten "Delta-Updates" bzw. "Delta-Patches". Das Verfahren ist weiterhin unabhängig von den verwendeten "Build-Systemen" und funktioniert unabhängig davon, was, warum und wie sich etwas am "Build" verändert hat. Änderungen von Kommentaren, Compiler-Optionen etc. führen nicht unnötiger Weise zur Aktualisierung der betroffenen ausführbaren Datei, nur eine funktionale Veränderung am resultierenden "Excutable" ist ein Kriterium für die Entscheidung über eine notwendige Aktualisierung der entsprechenden Datei, oder nicht.

## Patentansprüche

1. Verfahren zur Aktualisierung eines Computerprogramms einer industriellen Automatisierungskomponente,
wobei das Computerprogramm jeweils aus einer Vielzahl von ausführbaren Dateien besteht, und
wobei bei der Aktualisierung solche der Dateien (AD) identifiziert und in der Automatisierungskomponente aktualisiert werden, die sich von den jeweils korrespondierenden ausführbaren Dateien (ID) des bestehenden Computerprogramms der Automatisierungskomponente unterscheiden,
**dadurch gekennzeichnet,**
**dass** in den ausführbaren Dateien (ID) des bestehenden Computerprogramms und des aktualisierten Computerprogramms nicht-funktionale Dateiinhalte (NFE) jeweils identifiziert werden,
**dass** die ausführbaren Dateien (ID) des bestehenden Computerprogramms mit den korrespondierenden Dateien (AD) des aktualisierten Computerprogramms jeweils verglichen werden, wobei die identifizierten nicht-funktionalen Dateiinhalte (NFE) jeweils bei dem Vergleich nicht berücksichtigt werden, und
**dass** die bei dem Vergleich die als unterschiedlich zur jeweiligen Version des bestehenden Computerprogramms ermittelten ausführbaren Dateien (AD) des aktualisierten Computerprogramms zur Aktualisierung des bestehenden Computerprogramms der Automatisierungskomponente verwendet werden.

2. Verfahren nach Patentanspruch 1,
**dadurch gekennzeichnet,**
**dass** bei dem Vergleich die nicht-funktionalen Dateiinhalte ausgespart werden.

3. Verfahren nach einem der vorhergehenden Patentansprüche, **dadurch gekennzeichnet,**
**dass** für den Vergleich die nicht-funktionalen Dateiinhalte (NFE) in beiden Versionen der zu vergleichenden ausführbaren Dateien jeweils durch identische Bitmuster ersetzt werden, insbesondere durch logische Nullen oder Einsen.

4. Verfahren nach einem der vorhergehenden Patentansprüche, **dadurch gekennzeichnet,**
**dass** bei der Identifizierung der nicht-funktionalen Dateiinhalte (NFE) Zeitstempel der Dateien, Identifikationsbezeichnungen der Dateien, Signaturen der Dateien und/oder Versionsinformationen der Dateien als für den Vergleich nicht zu berücksichtigende Dateiinhalte erfasst werden.

5. Verfahren nach einem der vorhergehenden Patentansprüche, **dadurch gekennzeichnet,**
**dass** bei der Erzeugung von ausführbaren (AD) Dateien nicht-funktionale Informationen (NFE), insbesondere Versionsbezeichnungen, mit einem Muster gekennzeichnet werden, und
**dass** bei der Identifizierung der nicht-funktionalen Dateiinhalte (NFE) die ausführbaren Dateien (ID, AD) jeweils nach diesem binären Muster durchsucht werden und die damit gekennzeichneten Informationen bei dem Vergleich der ausführbaren Dateien (ID, AD) jeweils nicht berücksichtigt werden.

6. Verfahren nach einem der vorhergehenden Patentansprüche, **dadurch gekennzeichnet,**
**dass** für die Speicherung von nicht-funktionalen Dateiinhalten (NFE) eine Konvention für die dazu zu verwendenden Speicherbereiche der ausführbaren Dateien (ID, AD) definiert und berücksichtigt wird, wobei anhand dieser Konvention die nicht-funktionalen Dateiinhalte (NFE) für den Vergleich identifiziert und bei dem Vergleich ausgespart werden.

7. Verfahren nach einem der vorhergehende Patentansprüche, **dadurch gekennzeichnet,**
**dass** für den Vergleich für die zu vergleichenden Dateien ohne Berücksichtigung der nicht-funktionalen Inhalte (NFE) jeweils ein Signaturwert (CSI, CSA), eine Prüfsumme oder ein Hash-Wert errechnet und diese verglichen werden.

8. Engineering-System zur Aktualisierung eines Computerprogramms einer industriellen Automatisierungskomponente, wobei das Computerprogramm jeweils aus einer Vielzahl von ausführbaren Dateien (ID, AD) besteht, und
wobei das Engineering-System zur Identifizierung solcher Dateien (AD) eines aktualisierten Computerprogramms eingerichtet ist, die sich von den jeweils korrespondierenden ausführbaren Dateien (ID) des bestehenden Computerprogramms der Automatisierungskomponente unterscheiden, und
wobei das Engineering-System zur Aktualisierung dieser sich funktional unterscheidender ausführbarer Dateien (ID, AD) der Automatisierungskomponente eingerichtet ist,
**dadurch gekennzeichnet,**
**dass** das Engineering-System derart eingerichtet ist, dass in den ausführbaren Dateien (ID) des bestehenden Computerprogramms und des aktualisierten Computerprogramms nicht-funktionale Dateiinhalte (NFE) jeweils identifiziert werden,
**dass** die ausführbaren Dateien (ID) des bestehenden Computerprogramms mit den korrespondierenden Dateien (AD) des aktualisierten Computerprogramms jeweils verglichen werden, wobei die identifizierten nicht-funktionalen Dateiinhalte (NFE) jeweils bei dem Vergleich nicht berücksichtigt werden, und
**dass** die bei dem Vergleich die als unterschiedlich zur jeweiligen Version des bestehenden Computerprogramms ermittelten ausführbaren Dateien (AD) des aktualisierten Computerprogramms zur Aktualisierung des Computerprogramms der Automatisierungskomponente verwendet werden.

9. Engineering-System nach Patentanspruch 8,
**dadurch kennzeichnet,**
**dass** vorgesehen ist, bei dem Vergleich die nicht-funktionalen Dateiinhalte (NFE) auszusparen.

10. Engineering-System nach einem der Patentansprüche 8 oder 9,
**dadurch kennzeichnet,**
**dass** Engineering-System dazu eingerichtet ist,
**dass** für den Vergleich die nicht-funktionalen Dateiinhalte (NFE) in beiden Versionen der zu vergleichenden ausführbaren Dateien (ID, AD) jeweils durch identische Bitmuster ersetzt werden, insbesondere durch logische Nullen oder Einsen.

11. Engineering-System nach einem der Patentansprüche 8 bis 10,
**dadurch kennzeichnet,**
**dass** das Engineering-System dazu eingerichtet ist,
**dass** bei der Identifizierung der nicht-funktionalen Dateiinhalte (NFE) Zeitstempel der Dateien, Identifikationsbezeichnungen der Dateien, Signaturen der Dateien und/oder Versionsinformationen der Dateien (ID, AD) als für den Vergleich nicht zu berücksichtigende Dateiinhalte erfasst werden.

12. Engineering-System nach einem der Patentansprüche 8 bis 11,
**dadurch kennzeichnet,**
**dass** das Engineering-System derart eingerichtet ist, dass bei der Erzeugung von ausführbaren Dateien (ID, AD) nicht-funktionale Informationen (NFE), insbesondere Versionsbezeichnungen, mit einem Muster gekennzeichnet werden, und
**dass** bei der Identifizierung der nicht-funktionalen Dateiinhalte (NFE) die ausführbaren Dateien (ID, AD) jeweils nach diesem binären Muster durchsucht werden und die damit gekennzeichneten Informationen bei dem Vergleich der ausführbaren Dateien (ID, AD) jeweils nicht berücksichtigt werden.

13. Engineering-System nach einem der Patentansprüche 8 bis 12,
**dadurch kennzeichnet,**
**dass** für das Engineering-System vorgesehen ist,
**dass** für die Speicherung von nicht-funktionalen Dateiinhalten (NFE) eine Konvention für die dazu zu verwendenden Speicherbereiche der ausführbaren Dateien (ID, AD) definiert und berücksichtigt wird, wobei anhand dieser Konvention die nicht-funktionalen Dateiinhalte (NFE) für den Vergleich identifiziert und bei dem Vergleich ausgespart werden.

14. Engineering-System nach einem der Patentansprüche 8 bis 13,
**dadurch gekennzeichnet,**
**dass** für das Engineering-System vorgesehen ist,
**dass** für den Vergleich für die zu vergleichenden Dateien ohne Berücksichtigung der nicht-funktionalen Inhalte (NFE) jeweils ein Signaturwert(CSI, CSA), eine Prüfsumme oder ein Hash-Wert errechnet und diese verglichen werden.
